# EUROPÄISCHE PATENTANMELDUNG

(11) **EP 2 645 670 A1**
(43) Veröffentlichungstag der Anmeldung: **02.10.2013**
(21) Anmeldenummer: 13158948.3
(22) Anmeldetag: 13.03.2013
(51) Int. Cl.: H04L 29/06

(54) **Bereitstellung von Identitätsattributen eines Nutzers**

(30) Priorität: 26.03.2012 DE 102012204821
(71) Anmelder: Deutsche Post AG, 53113 Bonn (DE)
(72) Erfinder: Muthmann, Peter, Dr., 53604 Bad Honnef (DE); Derkum, Martina, 65197 Wiesbaden (DE)
(74) Vertreter: Jostarndt, Hans-Dieter

(57) **Zusammenfassung**

Die Erfindung betrifft ein Verfahren zum Bereitstellen von Identitätsattributen eines Nutzers für einen Dienstanbieter, wobei eine Mehrzahl von Identitätsattributen in einer Identifikationseinrichtung gespeichert ist. Das Verfahren umfasst folgende Schritte: (a) Empfangen einer Anforderung des Nutzers zur Bereitstellung der Identifikationsdaten in der Identifikationseinrichtung, wobei die Anforderung aufgrund einer Umleitung des Nutzers von dem Dienstanbieter zu der Identifikationseinrichtung übermittelt wird, (b) Empfangen von durch den Dienstanbieter bereitgestellten Informationen in der Identifikationseinrichtung zusammen mit der Anforderung, (c) Identifizieren des Nutzers in der Identifikationseinrichtung anhand von Daten, die von dem Nutzer an die Identifikationseinrichtung übergeben werden, und Ermitteln der dem identifizierten Nutzer zugeordneten Identitätsattribute und (d) Bereitstellen der Identitätsattribute für den Dienstanbieter in Abhängigkeit von den zusammen mit der Anforderung erhaltenen Informationen. Zudem betrifft die Erfindung eine zur Durchführung des Verfahrens geeignete Identifikationseinrichtung.

## Beschreibung

Die Erfindung betrifft einen Identitätsdienst, der von einer Identifikationseinrichtung bereitgestellt wird, um Identitätsattribute von Nutzer für einen Anbieter elektronischer Dienste bereitzustellen. Insbesondere betrifft die Erfindung ein Verfahren zum Bereitstellen von Identitätsattributen eines Nutzers für einen Dienstanbieter und eine Identifikationseinrichtung zum Bereitstellen von Identitätsattributen eines Nutzers für einen Dienstanbieter.

Elektronische Transaktionen, die ein Nutzer bei einem Anbieter eines elektronischen Dienstes ausführt, wie etwa die Registrierung bei dem Dienst, die Durchführung von Zahlungstransaktionen oder die Kommunikation mit einer den elektronischen Dienst anbietenden Behörde, erfordern häufig eine verlässliche Angabe von personenbezogenen Daten des Nutzers. Bei elektronischen Diensten können jedoch Nachweise zum Beleg von personenbezogenen Daten, die von einem Nutzer angegeben werden, wie etwa Ausweise, von dem Dienstanbieter nicht geprüft werden, da sie nicht elektronisch vorliegen bzw. eine sichere elektronische Prüfung nicht möglich ist. Um dennoch auf geprüfte personenbezogene Daten zurückzugreifen, können die Daten von einem Identitätsanbieter an den elektronischen Dienstanbieter übermittelt werden, der gegenüber dem Dienstanbieter als eine vertrauenswürdige Stelle fungiert, deren Angaben der Dienstanbieter vertraut. Der Identitätsanbieter kann die personenbezogenen Daten von Nutzern in einem abgesicherten Verfahren erheben und prüfen. Die Prüfung kann beispielsweise aufgrund eines persönlichen Erscheinens der Nutzer bei dem Identitätsanbieter vorgenommen werden.

Von dem Identitätsanbieter werden die personenbezogenen Daten eines Nutzers in einem sicheren Prozess an den elektronischen Dienstanbieter übergeben, bei dem die Manipulation der Daten ausgeschlossen ist und bei dem gewährleistet ist, dass die personenbezogenen Daten nicht ohne Zustimmung des Nutzers an den elektronischen Dienstanbieter übergeben werden.

Aus der US 2010/0251353 A1 ist ein Verfahren bekannt, bei dem personenbezogene Daten innerhalb von Identitätskarten von einem Identitätsanbieter an einen elektronischen Dienstanbieter übermittelt werden können. Der Vorgang wird von dem Nutzer autorisiert, indem der Nutzer ein entsprechendes Autorisierungstoken entweder an den Identitätsanbieter oder an den elektronischen Dienstanbieter übermittelt. Bei Übermittlung des Autorisierungstokens an den Identitätsanbieter erhält der Dienstanbieter bei einer nachfolgenden Anforderung aufgrund des Vorhandenseins des Autorisierungstokens die personenbezogenen Daten des Nutzers. Wenn das Autorisierungstoken an den Dienstanbieter übermittelt wird, kann dieser das Autorisierungstoken verwenden, um personenbezogene Daten von dem Identitätsanbieter abzurufen.

Nachdem das Autorisierungstoken bereitgestellt worden ist, kann der Dienstanbieter personenbezogene Daten bei dem in der US-Patentanmeldung beschriebenen Verfahren dann anfordern, wenn er sie benötigt. Ein Nachteil des Verfahrens besteht jedoch darin, dass der Nutzer auf den Vorgang zur Übermittlung seiner personenbezogenen Daten an den Dienstanbieter keinen Einfluss mehr nehmen kann, nachdem er das Autorisierungstoken an den Identifikationsanbieter oder den Dienstanbieter übermittelt hat. Der Nutzer verliert damit Kontrolle über den Prozess, wodurch er sich in seiner Privatsphäre beeinträchtigt fühlen kann. Auch ein mehrmaliges Abrufen von personenbezogenen Daten durch einen Dienstanbieter sowie die Weitergabe des Autorisierungstoken an einen Dritten und die Verwendung des Autorisierungstoken durch den Dritten zum Abrufen von personenbezogenen Daten eines Nutzers sind grundsätzlich möglich. Der Nutzer selbst kann derartige Nutzungen nicht verhindern. Hierzu sind geeignete Maßnahmen des Identitätsanbieters erforderlich, auf die sich der Nutzer schlicht verlassen muss.

Es eine Aufgabe der Erfindung, die Bereitstellung von personenbezogenen Daten eines Nutzers derart zu ermöglichen, dass die Beteiligung durch den Nutzer verbessert wird.

Die Aufgabe wird gelöst durch ein Verfahren nach Anspruch 1 und eine Identifikationseinrichtung nach Anspruch 15. Ausgestaltungen des Verfahrens und der Identifikationseinrichtung sind in den abhängigen Ansprüchen angegeben.

Gemäß einem ersten Aspekt schlägt die Erfindung ein Verfahren zum Bereitstellen von Identitätsattributen eines Nutzers für einen Dienstanbieter vor, wobei eine Mehrzahl von Identitätsattributen in einer Identifikationseinrichtung gespeichert ist. Das Verfahren umfasst folgende Schritte:
- Empfangen einer Anforderung des Nutzers zur Bereitstellung der Identifikationsdaten in der Identifikationseinrichtung, wobei die Anforderung aufgrund einer Umleitung des Nutzers von dem Dienstanbieter zu der Identifikationseinrichtung übermittelt wird,
- Empfangen von durch den Dienstanbieter bereitgestellten Informationen in der Identifikationseinrichtung zusammen mit der Anforderung,
- Identifizieren des Nutzers in der Identifikationseinrichtung anhand von Daten, die von dem Nutzer an die Identifikationseinrichtung übergeben werden, und Ermitteln der dem identifizierten Nutzer zugeordneten Identitätsattribute und
- Bereitstellen der Identitätsattribute für den Dienstanbieter in Abhängigkeit von den zusammen mit der Anforderung erhaltenen Informationen.

Gemäß einem weiteren Aspekt der Erfindung wird eine Identifikationseinrichtung zum Bereitstellen von Identitätsattributen eines Nutzers für einen Dienst-anbieter vorgeschlagen, wobei eine Mehrzahl von Identitätsattributen in einer Identifikationseinrichtung gespeichert ist. Die Identifikationseinrichtung ist dazu ausgestaltet,
- eine Anforderung des Nutzers zur Bereitstellung der Identifikationsdaten zu empfangen, wobei die Anforderung aufgrund einer Umleitung des Nutzers von dem Dienstanbieter zu der Identifikationseinrichtung übermittelt wird,
- durch den Dienstanbieter bereitgestellte Informationen zusammen mit der Anforderung zu empfangen,
- den Nutzer anhand von Daten zu identifizieren, die von dem Nutzer an die Identifikationseinrichtung übergeben werden, und die dem identifizierten Nutzer zugeordneten Identitätsattribute zu ermitteln und
- die Identitätsattribute für den Dienstanbieter in Abhängigkeit von den zusammen mit der Anforderung erhaltenen Informationen bereitzustellen.

Das vorgeschlagene Verfahren und die vorgeschlagene Identitätseinrichtung ermöglichen dem Identitätsanbieter, die Bereitstellung von Identitätsattributen eines Nutzers zu initiieren. Mittels der von dem Dienstanbieter bereitgestellten Informationen, die zusammen mit der Anforderung des Nutzers in der Identifikationseinrichtung empfangen werden, kann der Dienstanbieter zudem Einfluss auf die Art und Weise der Bereitstellung der Identitätsattribute des Nutzers nehmen. Die Bereitstellung der Identitätsattribute erfordert jedoch die Mitwirkung des Nutzers, der sich selbst gegenüber der Identifikationseinrichtung identifizieren muss, damit die Identitätsattribute bereitgestellt werden können. Damit wird eine Bereitstellung von Identitätsattributen ermöglicht, die der Dienstanbieter nach seinen Bedürfnissen beeinflussen kann, die jedoch der Kontrolle des Nutzers unterliegt. Bei den Identitätsattributen, die bereitgestellt werden können, kann es sich um beliebige personenbezogene Daten des Nutzers handeln.

Eine Ausgestaltung des Verfahrens und der Identifikationseinrichtung sieht vor, dass die bereitgestellten Identitätsattribute des Nutzers auf eine von dem Dienstanbieter angeforderte Zusammenstellung von Identitätsattributen beschränkt werden, wobei die angeforderte Zusammenstellung aus einer Mehrzahl von vorgegebenen Zusammenstellungen ausgewählt ist. Bei einer verbundenen Ausgestaltung des Verfahrens und der Identifikationseinrichtung ist eine Angabe der angeforderten Zusammenstellung in den zusammen mit der Anforderung erhaltenen Informationen, die von dem Dienstanbieter bereitgestellt werden, enthalten. Die Angabe umfasst in einer Ausführungsform des Verfahrens und der Identifikationseinrichtung eine der Zusammenstellung zugeordnete Kennung. Durch die Beschränkung der bereitgestellten Identitätsattribute auf eine Zusammenstellung, die vorzugsweise eine Untermenge der in der Identifikationseinrichtung gespeicherten Identitätsattribute des Nutzers umfasst, brauchen Identitätsattribute, die von dem Dienstanbieter nicht zwingend benötigt werden, nicht an den Dienstanbieter übermittelt zu werden. Hierdurch wird der Schutz der Privatsphäre des Nutzers verbessert. Anhand einer Mehrzahl von vorgegebenen Zusammenstellungen können zudem unterschiedliche Bedürfnisse verschiedener Dienstanbieter berücksichtigt werden.

Eine weitere Ausführungsform des Verfahrens und der Identifikationseinrichtung beinhaltet, dass die zusammen mit der Anforderung erhaltenen Informationen, die von dem Dienstanbieter bereitgestellt werden, eine Angabe der Identität des Dienstanbieters enthalten. Eine verbundene Ausgestaltung des Verfahrens und der Identifikationseinrichtung ist dadurch gekennzeichnet, dass die Bereitstellung der Identitätsattribute in Abhängigkeit von einer ermittelten Berechtigung des anhand der Angabe identifizierten Dienstanbieters zum Erhalt von Identitätsattributen erfolgt. Hierdurch kann die Abgabe von Identitätsattributen des Nutzers auf berechtigte Dienstanbieter beschränkt werden, die beispielsweise nach einem vorgegebenen Auswahlkriterium in der Identifikationseinrichtung registriert werden. Hierdurch wird verhindert, dass Identitätsattribute an beliebige Dienstanbieters übermittelt werden, so dass der Schutz der Privatsphäre des Nutzers weiter verbessert wird. In einer weiteren Ausgestaltung kann die den Dienstanbieter identifizierende Angabe auch dazu verwendet werden, den Nutzer über die Identität des Dienstanbieters zu informieren, so dass der Nutzer prüfen kann, ob die Identitätsattribute an einen Dienstanbieter bereitgestellt werden, den er hierzu bestimmt hat.

Die Umleitung des Nutzers zu der Identifikationseinrichtung erfolgt in einer weiteren Ausführungsform des Verfahrens und der Identifikationseinrichtung aufgrund eines Aufrufs eines von dem Dienstanbieter auf einer Webseite bereitgestellten Ressourcenidentifizierers, insbesondere einer URL (Uniform Resource Locator). Die von dem Dienstanbieter bereitgestellten Informationen, die zusammen mit der Anforderung des Nutzers in der Identifikationseinrichtung empfangen werden, können als Parameter in dem Ressourcenidentifizierer enthalten sein. Die Parameter werden bei der Umleitung des Nutzers an die Identifikationseinrichtung übergeben, so dass sie zusammen mit der Anforderung empfangen werden.

Um die Identitätsattribute weitergehend gegen einen Zugriff durch unbefugte Dritte zu sichern, sieht eine Ausführungsform des Verfahrens und der Identifikationseinrichtung vor, dass zusätzlich zu der Identifizierung eine Authentifizierung des Nutzers vorgenommen wird, wobei die Identitätsattribute des Nutzers nur bei erfolgreicher Authentifizierung bereitgestellt werden. Die Nutzerauthentifizierung wird in einer Ausgestaltung in Abhängigkeit von den von dem Dienstanbieter bereitgestellten Informationen durchgeführt. Anhand dieser Informationen kann beispielsweise ermittelt werden, ob eine eistufige Authentisierung oder eine zweistufe Authentisierung durchgeführt wird, wobei letztere eine bessere Absicherung ermöglicht.

Darüber hinaus beinhaltet eine Ausgestaltung des Verfahrens und der Identifikationseinrichtung, dass die Identifikationseinrichtung die Identitätsattribute bereitstellt, nachdem der Nutzer der Bereitstellung auf eine entsprechende Aufforderung der Identifikationseinrichtung zugestimmt hat. Die sodann bereitgestellten Identitätsattribute des Nutzers können im Zusammenhang mit der Aufforderung angezeigt werden. Aufgrund der Abfrage der Zustimmung des Nutzers zur Bereitstellung bestimmter ihm angezeigter Identitätsattribute hat ein Nutzer, der grundsätzlich zur Preisgabe seiner Identitätsattribute bereit ist und sich beispielsweise deswegen gegenüber der Identifikationseinrichtung authentisiert hat, die Möglichkeit, die Bereitstellung der angeforderten Identitätsattribute zu verhindern.

Ferner ist eine Ausführungsform des Verfahrens und der Identifikationseinrichtung dadurch gekennzeichnet, dass der Nutzer aufgrund der Bereitstellung der Identitätsattribute von der Identifikationseinrichtung zu dem Dienstanbieter umgeleitet wird. Hierdurch gelangt der Nutzer aufgrund der Bereitstellung der Identitätsattribute wieder zu dem Dienstanbieter zurück, der die Bereitstellung der Identitätsattribute durch eine Umleitung des Nutzers zu der Identifikationseinrichtung initiiert hat. Die Umleitung des Nutzers zu dem Dienstanbieter erfolgt in einer Ausführungsform des Verfahrens und der Identifikationseinrichtung aufgrund des Aufrufs eines von der Identifikationseinrichtung bereitgestellten weiteren Ressourcenidentifizierers. Der weitere Ressourcenidentifizierer kann innerhalb der zusammen mit der Anforderung erhaltenen Information, die von dem Dienstanbieter bereitgestellt wird, an die Identifikationseinrichtung übergeben werden.

Neben dem Verfahren und der Identifikationseinrichtung stellt die Erfindung zudem ein Computerprogramm bereit. Das Computerprogramm umfasst Anweisungen zur Durchführung des Verfahrens uns einer Ausgestaltungen mittels einer Prozessoreinrichtung, wenn das Computerprogramm auf der Prozessoreinrichtung ausgeführt wird. Die Prozessoreinrichtung kann insbesondere in der Identifikationseinrichtung angeordnet sein. Es kann sich auch um eine verteilte Prozessoreinrichtung handeln, die neben der Prozessoreinrichtung der Identifikationseinrichtung über weitere Bestandteile verfügt, welche durch einen oder mehrere Prozessoren eines Nutzercomputers des Nutzers und/oder eines oder mehreren Prozessoren einer Servereinrichtung des Dienstanbieters gebildet werden.

Die zuvor genannten und weitere Vorteile und Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematische Darstellung einer Anordnung mit Identifikationseinrichtung, die mit einem Nutzercomputer eines Nutzers und einer Servereinrichtung eines Dienstanbieters verbunden ist,
- Fig. 2: eine schematische Darstellung von Schritten zur Durchführung eines Mobilfunk-TAN-Verfahrens und
- Fig. 3: eine schematische Darstellung von Schritten zur Bereitstellung von Identitätsattributen des Nutzers in der Anordnung.

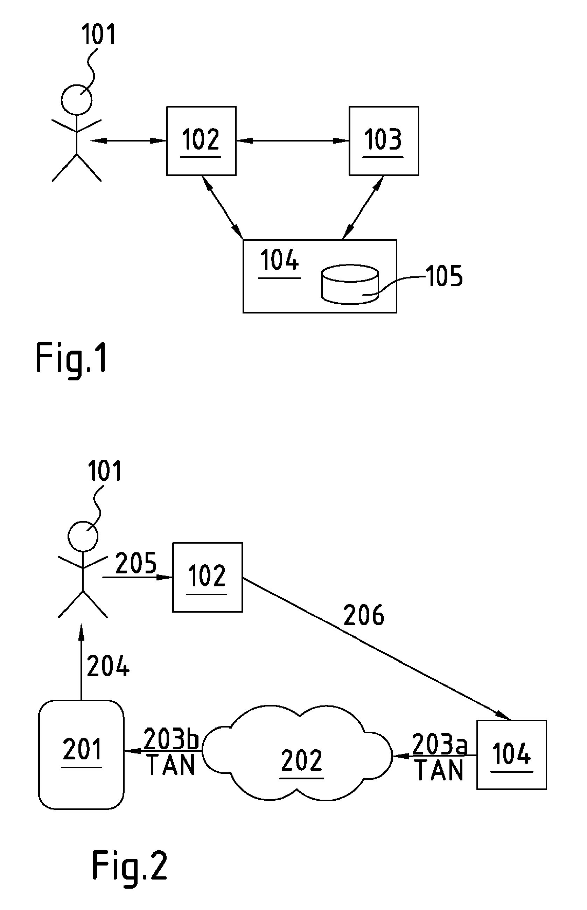

Bei der in der Figur 1 gezeigten Anordnung greift ein Nutzer 101 mit seinem Nutzercomputer 102 auf die Servereinrichtung 103 eines Dienstanbieters zu, um auf Inhalte und/oder Dienste zuzugreifen, die von dem Dienstanbieter mittels der Servereinrichtung 103 bereitgestellt werden. Der Zugriff erfolgt über ein Datennetz, wie beispielsweise das Internet, welches den elektronischen Datenaustausch zwischen dem Nutzercomputer 102 und der Servereinrichtung 103 ermöglicht. Identitätsattribute des Nutzers 101 können der Servereinrichtung 103 von einer Identifikationseinrichtung 104 bereitgestellt werden. Dabei versteht sich, dass der in der Figur 1 veranschaulichte Nutzer 101 beispielhaft für eine Vielzahl von Nutzern 101 steht, deren Identitätsattribute von der Identifikationseinrichtung 104 bereitgestellt werden können und dass die Servereinrichtung 103 lediglich beispielhaft für eine Mehrzahl von Servereinrichtungen 103 steht, denen die Identifikationseinrichtung 104 Identitätsattribute von Nutzern 101 verfügbar machen kann.

Die Bereitstellung von Identitätsattributen für die Servereinrichtung 103 erfolgt aufgrund einer Interaktion zwischen dem Nutzer 101 und der Identifikationseinrichtung 104, an welcher der Nutzer 101 mithilfe seines Nutzercomputers 102 teilnimmt. Um die Identitätsattribute des Nutzers 101 bereitstellen zu können, sind daher die Servereinrichtung 103 und der Nutzercomputer 102 mit der Identifikationseinrichtung 104 verbunden. Die Verbindung kann über das Datennetz hergestellt werden, über das Daten zwischen dem Nutzercomputer 102 und der Servereinrichtung 103 ausgetauscht werden. Gleichfalls können die Servereinrichtung 103 und/oder der Nutzercomputer 102 in anderer Weise, etwa über ein separates Datennetz, mit der Identifikationseinrichtung 104 verbunden sein.

Die Servereinrichtung 103 stellt eine Webplattform (Website) bereit, die eine oder mehrere einzelne Webseiten umfassen kann, auf denen Inhalte bereitgestellt werden und/oder über die der Nutzer 101 auf Dienste zugreifen kann. Hierbei kann es sich um jegliche dem Fachmann an sich bekannte Dienste handeln, die über eine Webplattform angeboten werden können. Beispiele sind E-Commerce-Dienste, Online-Banking-Dienste, Dienste von Behörden, wie etwa die Einreichung von Steuererklärungen, oder auch die Beauftragung weiterer Dienste, die selbst nicht über die Webplattform zugänglich sind. Die Servereinrichtung 103 ist in einer dem Fachmann an sich bekannten Art und Weise als ein Servercomputer ausgestaltet, der über einen oder mehrere Prozessoren zur Ausführung von Software zur Bereitstellung der Webplattform, eine Speichereinheit zur Speicherung der Software sowie weiterer Daten und, falls erforderlich, weitere für die Bereitstellung der Webplattform erforderliche Komponenten verfügt.

Der Nutzercomputer 102 ist eine stationäre oder mobile Datenverarbeitungsanlage, die mit einer Prozessoreinheit sowie einer Speichereinheit ausgestattet ist und über eine Benutzerschnittstelle mit dem Fachmann an sich bekannten Ein- und Ausgabemitteln zur Interaktion mit dem Nutzer 101 verfügt. Für den Zugriff auf die von der Servereinrichtung 103 bereitgestellte Webplattform und zur Interaktion des Nutzers 101 mit der Identifikationseinrichtung 104, die ebenfalls über eine Webplattform erfolgt, verfügt der Nutzercomputer 102 über einen an sich bekannten Webbrowser. Hierbei handelt es sich um ein Softwareprogramm, das auf dem Nutzercomputer 102 installiert ist und mittels der Prozessoreinheit ausgeführt werden kann und das die Betrachtung von Webseiten und die Interaktion des Nutzers 101 mit entsprechenden Elementen von Webseiten, wie etwa Eingabefelder und Buttons, ermöglicht. Beispielhafte Webbrowser, die in dem Nutzercomputer 102 eingesetzt werden können, sind die Programme "Internet Explorer" der Firma Microsoft und "Firefox" der Mozilla Foundation.

Die Identifikationseinrichtung 104 stellt für den Datenaustausch mit der Servereinrichtung 103 des Dienstanbieters eine geeignete Schnittstelle zur elektronischen Kommunikation bereit, die vorzugsweise einen automatisierten Datenaustausch ohne Beteiligung eines Bedieners der Identifikationseinrichtung 104 und der Servereinrichtung 103 ermöglicht. Zur Kommunikation mit dem Nutzer 101 stellt die Identifikationseinrichtung 104 eine weitere Webplattform mit mehreren Webseiten bereit, auf die der Nutzer 101 mithilfe des Webbrowsers seines Nutzercomputers 102 zugreifen kann. Die Identifikationseinrichtung 104 ist als ein Servercomputer mit einem oder mehreren Prozessoren und Speichereinheit sowie weiterer Infrastruktur zur Implementierung der Funktion der Identifikationseinrichtung 104 ausgestaltet.

Weiterhin verfügt die Identifikationseinrichtung 104 über eine Identitätsdatenbank 105, in der Identitätsattribute von Nutzern 101 gespeichert sind, die sich bei dem Identitätsdienst registriert haben, um ihre Identitätsattribute Dienstanbietern verfügbar machen zu können. Die Identitätsattribute der Nutzer 101, die in der Identitätsdatenbank 105 hinterlegt werden können, können jegliche personenbezogenen Daten der Nutzer 101 umfassen. Beispielsweise umfassen die Identitätsattribute eines Nutzers 101 insbesondere den Namen des Nutzers 101, seine Postanschrift, E-Mail-Adressen und gegebenenfalls vorhandene weitere Adressen zur elektronischen Kommunikation mit dem Nutzer 101, Telefonnummern des Nutzers 101 sowie das Geburtsdatum. Aus den in der Identitätsdatenbank 105 gespeicherten Identitätsattributen, die im Folgenden auch als primäre Identitätsattribute bezeichnet werden, kann die Identifikationseinrichtung 104 in einer Ausgestaltung zudem weitere Identitätsattribute ableiten und Dienstanbietern zur Verfügung stellen. Ein Beispiel für ein abgeleitetes Identitätsattribut eines Nutzers 101 ist eine Angabe, ob der Nutzer 101 volljährig ist. Diese Angabe kann die Identifikationseinrichtung 104 aus dem Geburtsdatum des Nutzers 101 ableiten.

Gegenüber dem Dienstanbieter fungiert die Identifikationseinrichtung 104 als eine vertrauenswürdige Stelle. Dies bedeutet, dass der Dienstanbieter auf die Korrektheit der von der Identifikationseinrichtung 104 bereitgestellten Identitätsattribute vertraut. Zu diesem Zweck stellt der Identitätsanbieter sicher, dass die von ihm erhobenen Identitätsattribute korrekt sind.

Die Identitätsattribute der Nutzer 101, die in der Identitätsdatenbank 105 gespeichert sind, werden von dem Identitätsanbieter in einem abgesicherten Prozess erhoben. Vorzugsweise werden die von einem Nutzer 101 angegebene Identitätsattribute von dem Identitätsanbieter durch Prüfung von vorgelegten Nachweisen oder in anderer Weise überprüft. In einer Ausgestaltung ist das persönliche Erscheinen eines Nutzers 101 bei dem Identitätsanbieter vorgesehen, um die Identitätsattribute zu erheben. Hierbei legt der Nutzer 101 seinen Ausweis und gegebenenfalls zusätzliche weitere vertrauenswürdige Nachweise zum Beleg seiner Angaben vor, und ein Mitarbeiter des Identifikationsanbieters prüft den Ausweis und die gegebenenfalls vorgelegten weiteren Nachweise, bevor die Identitätsattribute in der Identitätsdatenbank 101 gespeichert werden.
Identitätsattribute, die nicht anhand von Ausweisen, Urkunden oder ähnlichen Nachweisen belegt werden können, können von dem Identitätsanbieter in anderer Weise geprüft werden. Adressen, wie etwa E-Mail-Adressen oder Telefonnummern, können beispielsweise durch eine Kontaktaufnahme des Dienstanbieters mit dem Nutzer 101 unter Verwendung der Adressen oder Telefonnummern verifiziert werden, wobei der Nutzer 101 in einer bestimmten Weise auf die Kontaktaufnahme antworten muss, damit der Identitätsanbieter die Verifikation als erfolgreich ansieht. Durch die Prüfung werden Manipulationen der Identitätsattribute verhindert, und es wird gewährleistet, dass der Servereinrichtung 103 des Identitätsanbieters korrekte Identitätsattribute des Nutzers 101 zur Verfügung gestellt werden können. Aufgrund der vorgesehenen Überprüfung der Identitätsattribute durch den Identitätsanbieter können die Identitätsattribute auch für sensible Dienste, wie etwa Online-Banking oder Behördendienste, zur Verfügung gestellt werden.

Neben den Identitätsattributen, die von dem Dienstanbieter in der zuvor angegebenen Weise geprüft werden, können auch Identitätsattribute bereitgestellt werden, die von dem Identitätsanbieter nicht geprüft werden. Diese Identitätsattribute werden bei der Bereitstellung für den Dienstanbieter vorzugsweise als ungeprüft gekennzeichnet, so dass der Dienstanbieter genaue Kenntnis darüber erhält, welche Identitätsattribute eines Nutzers 101 von dem Identitätsanbieter verifiziert worden sind und welche nicht.

Insbesondere um eine sichere Freigabe der Bereitstellung von Identitätsattributen durch die Nutzer 101 zu ermöglichen, ist die Identifikationseinrichtung 104 dazu in der Lage, die in der Identitätsdatenbank 105 registrierten Nutzer 101 zu authentifizieren. Dies geschieht anhand von Authentifizierungsinformationen der Nutzer 101, die zusammen mit den Identitätsattributen in der Identitätsdatenbank 105 gespeichert sein können. Die Authentifizierungsinformationen für einen Nutzer 101 können beispielsweise eine Nutzerkennung und ein zugehöriges geheimes Passwort, welches der Nutzer 101 zur Authentisierung auf einer von der Identifikationseinrichtung 104 bereitgestellten Webseite oder in anderer Weise eingibt, oder ein digitales Zertifikat zur Prüfung einer digitalen Signatur, die der Nutzer 101 zur Authentisierung an die Identifikationseinrichtung 104 übermittelt, umfassen. Gleichfalls können die Authentisierungsinformationen beispielsweise Daten zur Prüfung eines biometrischen Merkmals des Nutzers 101, wie etwa eines Fingerabdrucks, eines Irismusters oder eines Stimmprofils, sein, wobei das biometrische Merkmale zur Nutzerauthentifizierung mittels des Nutzercomputers 102 erfasst und zur Prüfung an die Identifikationseinrichtung 104 übermittelt wird.

Gleichfalls können auch Identitätsattribute von Nutzern 101 zu deren Authentifizierung in der Identifikationseinrichtung 104 herangezogen werden, beispielsweise zur Authentifizierung anhand eines Mobilfunk-TAN-Verfahrens, wie es in der Figur 2 schematisch veranschaulicht ist.

Zur Authentifizierung eines Nutzers 101 anhand des Mobilfunk-TAN-Verfahrens erzeugt die Identifikationseinrichtung 104 eine Transaktionsnummer (TAN) und übermittelt eine Nachricht mit der Transaktionsnummer an ein Mobilfunkendgerät 201 des Nutzers 101 (Schritte 203a, 203b). Zur Übermittlung der Nachricht wird eine Telefonnummer verwendet, die dem Mobilfunkendgerät 201 zugeordnet und als ein Identitätsattribut des Nutzers 101 in der Identitätsdatenbank gespeichert ist. Bei der TAN handelt es sich um eine einmal (d.h. für genau einen Authentifizierungsvorgang) verwendete alphanumerische Zeichenfolge, die vorzugsweise zufällig, d.h. mittels eines Zufallsalgorithmus, in der Identifikationseinrichtung 104 erzeugt wird. Die Nachricht mit der TAN kann beispielsweise über ein Mobilfunknetz 202 mittels des SMS (Short Message Service) oder eines anderen von dem Mobilfunknetz 202 bereitgestellten Nachrichtenübermittlungsdienstes an das Mobilfunkendgerät 201 des Nutzers 101 übertragen werden.

Nach dem Empfang der Nachricht gibt der Nutzer 101 die TAN auf einer hierzu von der Identifikationseinrichtung 104 bereitgestellten Webseite ein (Schritt 205), und die eingegebene TAN wird an die Identifikationseinrichtung 104 übermittelt. Bei der in der Figur 2 dargestellten Ausgestaltung greift der Nutzer 101 mittels seines Nutzercomputers 102 auf die Webseite zu. Die TAN wird dabei nach dem Empfang der Nachricht an dem Mobilfunkendgerät 201 angezeigt und zur Eingabe auf der Webseite liest der Nutzer 101 die TAN am Mobilfunk-endgerät 201 ab (Schritt 204) und gibt sie sodann mittels des Nutzercomputers 102 auf der Webseite ein.

Nach der Übermittlung der von dem Nutzer 101 eingegebenen TAN an die Identifikationseinrichtung 104 vergleicht die Identifikationseinrichtung 104 die eingegebene TAN mit der zuvor an das Mobilfunkendgerät 201 des Nutzers 101 übermittelten TAN, die zu diesem Zweck in der Identifikationseinrichtung 104 gespeichert wird. Bei Übereinstimmung beider TANs wird die Nutzerauthentifizierung erfolgreich abgeschlossen. Bei Abweichungen zwischen den TANs wird die Nutzerauthentifizierung als fehlgeschlagen angesehen. Im Falle eines Fehlschlags kann das Mobilfunk-TAN-Verfahren mit einer neuen TAN wiederholt werden, um beispielsweise einem Nutzer 101, der die TAN versehentlich fehlerhaft auf der Webseite eingegeben hat, bei der Wiederholung die Möglichkeit zu einer erfolgreichen Authentisierung zu geben.

Die Dienstanbieter, denen Identitätsattribute von Nutzern 101 durch die Identifikationseinrichtung 104 bereitgestellt werden bzw. die von den Dienstanbietern betriebenen Servereinrichtungen 103, sind in einer Ausgestaltung ebenfalls in der Identifikationseinrichtung 104 registriert. Die Bereitstellung von Identitätsattributen erfolgt in dieser Ausgestaltung vorzugsweise nur für registrierte Servereinrichtungen 103. Die Registrierung eines Dienstanbieters bzw. dessen Servereinrichtung 103 kann der Identitätsanbieter von vorgebenden Kriterien abhängig machen, so dass Identitätsattribute lediglich für solche Dienstanbieter bereitgestellt werden, welche die Kriterien erfüllen. Durch entsprechende Kriterien kann die Sicherheit von Nutzern 101 gegen den Missbrauch ihrer Identitätsattribute durch unseriöse Dienstanbieter erhöht werden. Zudem können im Zusammenhang mit der Registrierung eines Dienstanbieters spezifische Parameter für die Bereitstellung von Identitätsattributen in der Identifikationseinrichtung 104 hinterlegt werden. Hierbei kann es sich wie im Folgenden noch beschrieben wird, beispielsweise um eine oder mehrere Webadressen handeln, auf die ein Nutzer 101 nach der Bereitstellung von Identitätsdaten für den Dienstanbieter umgeleitet wird. Gleichfalls kann beispielsweise eine Zusammenstellung von Identitätsattributen hinterlegt werden, die aufgrund einer Anforderung für den Dienstanbieter bereitgestellt werden.

Auf eine Anforderung von Identitätsattributen eines Nutzers 101, können dem mit der Anforderung verknüpften Dienstanbieter sämtliche in der Identitätsdatenbank 105 gespeicherten primären Identitätsattribute bereitgestellt werden. Gleichfalls können die bereitgestellten Identitätsattribute des Nutzers 101 jedoch auch auf eine Auswahl aus den in der Identitätsdatenbank 105 gespeicherten Identitätsattributen beschränkt werden. Hierdurch wird vermieden, dass Identitätsattribute, die von dem Dienstanbieter nicht zwingend benötigt werden, an den Dienstanbieter übermittelt werden. Damit kann die Privatsphäre des Nutzers 101 geschützt werden. Wie weiter unten noch erläutert wird, wird der Nutzer 101 jeweils über die angeforderte Auswahl seiner Identitätsattribute informiert, bevor diese für den Dienstanbieter bereitgestellt werden, und die Bereitstellung erfolgt nur dann, wenn der Nutzer 101 ihr zustimmt. Seine Zustimmung kann der Nutzer dabei insbesondere dann verweigern, wenn er der Auffassung ist, dass die von dem Dienstanbieter angeforderte Auswahl solche Identitätsattribute umfasst, die der Dienstanbieter nach Auffassung des Nutzers 101 nicht benötigt.

Um die Auswahl von Identitätsattributen für den Dienstanbieter zu vereinfachen, sind in einer Ausgestaltung vordefinierte Zusammenstellungen von Identitätsattributen vorgesehen, deren Zusammensetzungen in der Identifikationseinrichtung 104 hinterlegt sind und denen jeweils eine Kennung zugeordnet ist, mit der die Zusammenstellungen angefordert werden können. Dabei kann vorgesehen sein, dass bei jeder Anforderung von Identitätsattributen eines Nutzers 101 anhand der entsprechenden Kennung angegeben wird, welche Zusammenstellung von Identitätsattributen bereitgestellt werden soll. Alternativ kann auch vorgesehen sein, dass für einen oder mehrere Dienstanbieter im Zusammenhang mit ihrer Registrierung in der Identifikationseinrichtung 104 eine Zusammenstellung hinterlegt wird, die jeweils auf eine Anforderung des betreffenden Dienstanbieters für diesen bereitgestellt wird. Zur Erhöhung der Flexibilität für den Dienstanbieter kann vorgesehen sein, dass dieser bei einer Anforderung von Identitätsattributen des Nutzers 101 optional die Kennung einer Zusammenstellung angeben kann, die von der für ihn in der Identifikationseinrichtung 104 hinterlegten Zusammenstellung abweichen kann. Ist eine solche Kennung in einer Anforderung enthalten, so stellt die Identifikationseinrichtung 104 die dieser Kennung zugeordnete Zusammenstellung anstelle der für den Dienstanbieter hinterlegten Zusammenstellung bereit.

Grundsätzlich können beliebige Zusammenstellungen von Identitätsattributen von dem Identifikationsdienst zur Verfügung gestellt werden. Beispielsweise können die Zusammenstellungen eine oder mehrere der nachfolgend angegebenen Zusammenstellungen umfassen:
a) Name und Postanschrift des Nutzers 101;
b) Name des Nutzers 101 und eine oder mehrere Adressen zum elektronischen Nachrichtenaustausch mit dem Nutzer 101;
b) Name und eine oder mehrere Telefonnummern des Nutzers 101;
d) Geburtsdatum und/oder Alter des Nutzers 101 und optional der Name des Nutzers 101;
e) eine Angabe, ob der Nutzer 101 eine vorgegebene Altersschwelle überschritten hat, beispielsweise, ob er volljährig ist oder ein vorgegebenes anderes Alter erreicht oder überschritten hat (etwa 16 Jahre im Hinblick auf den Jugendschutz oder 21 Jahre im Hinblick auf die Berechtigung zum Führen einer Waffe);
f) eine Zugehörig des Nutzers zu einer bestimmten Altersklasse, beispielsweise von 20-29 oder 30-39 Jahren, wobei beliebige Altersklassen vorgegeben werden können;
g) das Geschlecht des Nutzers 101;
h) Bankdaten, wie etwa Kontodaten oder Kreditkartendaten

Die Zusammenstellungen können in der zuvor beschriebenen Form jeweils einzeln zur Verfügung gestellt werden. Ergänzend oder alternativ können Schnittmengen der genannten Zusammenstellungen als weitere Zusammenstellungen bereitgestellt werden. Im Zusammenhang mit den zuvor genannten Zusammenstellungen unter d) bis g) erkennt der Fachmann, dass das Geburtsdatum und/oder die Angabe, ob der Nutzer eine Altersschwelle überschritten hat bzw. zu einer bestimmten Altersklasse gehört sowie das Geschlecht des Nutzers, insbesondere ohne den Namen oder sonstige den Nutzer weitergehend identifizierbaren Angaben bereitgestellt werden können. Hierdurch braucht der Nutzer beispielsweise gegenüber einem Dienstanbieter, dem es lediglich auf die Volljährigkeit des Nutzers 101 oder das Überschreiten einer andere Altersschwelle ankommt, seine Identität nicht preiszugeben, was ebenfalls dem Schutz der Privatsphäre des Nutzers 101 dient.

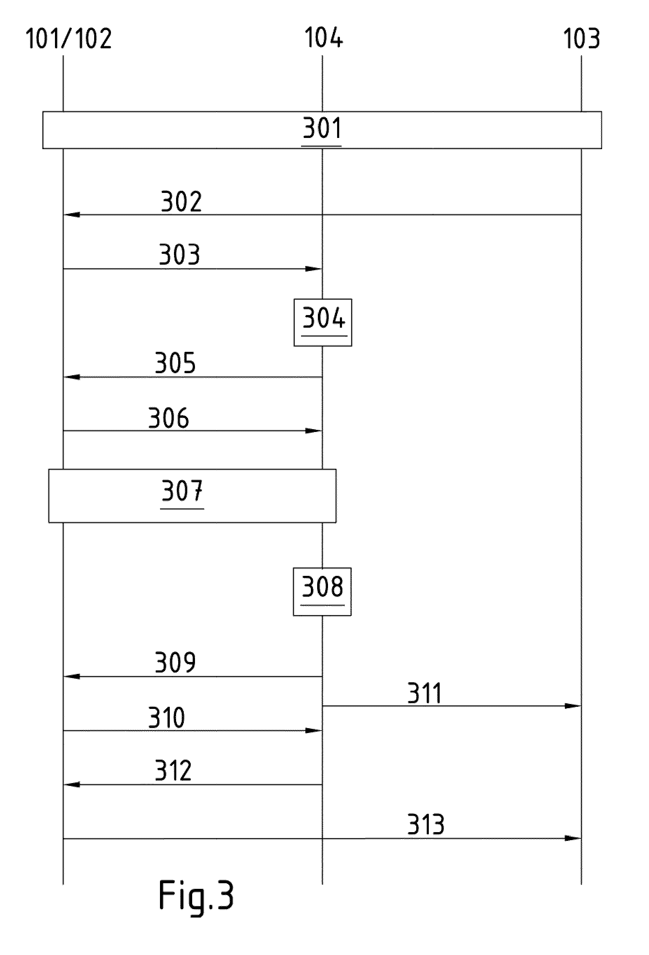

Figur 3 zeigt in einer schematischen Darstellung beispielhaft ein Ablauf zur Bereitstellung von Identitätsattributen eines Nutzers 101 für einen Dienstanbieter durch die Identifikationseinrichtung 104 in der Anordnung, die in der Figur 1 veranschaulicht ist.

Die Anforderung von Identitätsattributen des Nutzers 101 erfolgt aufgrund einer Interaktion des Nutzers 101 mit der Servereinrichtung 103 des Dienstanbieters über die von der Servereinrichtung 103 bereitgestellte Webplattform, auf die der Nutzer mittels seines Nutzercomputers 102 zugreift. Die Interaktion zwischen dem Nutzer 101 und der Servereinrichtung 103, welche der Auslösung der Bereitstellung der Identitätsattribute des Nutzers 101 vorausgeht, ist in der Figur 3 anhand des Schritts 301 veranschaulicht. Die Bereitstellung von Identitätsattributen des Nutzers 101 wird aufgrund der Interaktion des Nutzers 101 mit der Servereinrichtung 103 ausgelöst. Unter anderem kann die Bereitstellung der Identitätsattribute Bestandteil eines bestimmten von dem Nutzer 101 auf der Webplattform durchgeführten Prozesses sein, wie etwa die Durchführung einer bestimmten Transaktion, insbesondere einer Zahlungstransaktion, eine erstmalige Registrierung des Nutzers 101 in der Servereinrichtung 103 oder ein anderer Prozess, bei dem es auf die Korrektheit der verwendeten Identitätsattribute ankommt. Die Bereitstellung der Identitätsattribute kann durch eine bestimmte Nutzeraktion im Rahmen der Interaktion mit der Webplattform angestoßen werden, beispielsweise durch eine Nutzeraktion zum Starten eines der zuvor genannten Prozesse.

Um die Übermittlung von Identitätsattributen des Nutzers 101 auszulösen, stellt die Servereinrichtung 103 in dem Schritt 302 auf der Webplattform einen sogenannten Hyperlink bereit, über den der Nutzer 101 zu der Identifikationseinrichtung 104 umgeleitet wird. Der Hyperlink kann innerhalb einer zuvor bereits dem Nutzer 101 bereitgestellten Webseite aufgrund einer Nutzeraktion verfügbar gemacht werden, oder aufgrund der Nutzeraktion kann eine neue Webseite mit dem Hyperlink innerhalb der Webplattform dem Nutzer 101 bereitgestellt werden. Der Hyperlink ist mit einem als Netzwerkadresse dienenden Ressourcenidentifizierer der Servereinrichtung 103 verknüpft. Um dem Hyperlink zu folgen ruft der Nutzer 101 diesen in einer dem Fachmann an sich bekannten Art und Weise mittels des Webbrowsers des Nutzercomputers 102 auf, indem er beispielsweise den Hyperlink bzw. ein mit dem Hyperlink verknüpftes Element auf der von der Servereinrichtung 103 bereitgestellten Webseite anklickt. Aufgrund des Aufrufs des Hyperlinks nimmt der Webbrowser des Nutzercomputers 102 in dem Schritt 303 Kontakt mit der Servereinrichtung 103 auf. Hierzu verwendet der Webbrowser den mit dem Hyperlink verknüpfte Ressourcenidentifizierer der Identifikationseinrichtung 104. Die Kontaktaufnahme mit der Identifikationseinrichtung 104 ist die eigentliche Anforderung der Identitätsattribute des Nutzers 101, die somit von dem Nutzer 101 selbst anhand von durch die Servereinrichtung 103 verfügbar gemachten Informationen, nämlich der Webadresse, vorgenommen wird.

Der Ressourcenidentifizierer kann als eine URL (Uniform Resource Locator) ausgestaltet sein. Neben einer die Identitätseinrichtung 104 identifizierenden Angabe, die bei der Herstellung des Kontakts zwischen dem Webbrowser des Nutzercomputers 102 und der Identifikationseinrichtung 104 verwendet wird, umfasst der Ressourcenidentifizierer Zusatzangaben, die bei der Kontaktaufnahme mittels des Webbrowsers des Nutzers 101 an die Identifikationseinrichtung 104 übergeben werden. Insbesondere kann der Ressourcenidentifizierer die folgende Form aufweisen:
http://www.identservice.de?<parameter>

Der Teil vor dem Fragezeichen dient hierbei zur Identifizierung der Identifikationseinrichtung 104, der in dem beispielhaft wiedergegebenen Fall die Domain identservice.de zugeordnet ist. Der Teil der Webadresse nach dem Fragezeichen, bei dem es sich um den sogenannten *Query String* handelt, umfasst Zusatzangaben, welche bei der Kontaktaufnahme durch den Webbrowser des Nutzers 101 an die Identifikationseinrichtung 104 übergeben werden. Die Angabe <parameter> im *Query String* der zuvor angegebenen Webadresse steht für mehrere Zusatzangaben, die im Folgenden noch genauer erläutert werden. Anhand der Parameter hat der Dienstanbieter auch dann die Möglichkeit, Parameter zur Abwicklung der Bereitstellung der Identitätsattribute an die Identifikationseinrichtung 104 zu übergeben, wenn eine direkte Übermittlung einer Nachricht oder dergleichen von der Servereinrichtung 103 an die Identifikationseinrichtung 104 nicht vorgesehen ist.

Sofern die Abgabe von Identitätsattributen, wie zuvor beschrieben, auf registrierte Servereinrichtungen 103 beschränkt ist, umfassen die in der Web-adresse enthaltenen Zusatzangaben umfassen vorzugsweise unter anderem eine Kennung der Servereinrichtung 103 bzw. des Dienstanbieters, der die Servereinrichtung 103 betreibt. Anhand der Kennung identifiziert die Identifikationseinrichtung 104 die Servereinrichtung 103 bzw. den Dienstanbieter nach der Kontaktaufnahme durch den Webbrowser des Nutzers 101 und ermittelt, ob der die Servereinrichtung 103 bzw. der die Servereinrichtung 103 betreibende Dienstanbieter in der Identifikationseinrichtung 104 registriert ist und die Berechtigung dazu besitzt, Identitätsattribute von Nutzern 101 zu erhalten (Schritt 304). Optional kann zusätzlich eine Authentifizierung des Dienstanbieters innerhalb der Identifikationseinrichtung 104 anhand von Authentisierungsinformationen vorgesehen sein, welche die Servereinrichtung 103 zusätzlich zu der Kennung in den Ressourcenidentifizierer einbringt, um sie an die Identifizierungseinrichtung 104 zu übergeben. Die Authentisierungsinformationen können beispielsweise eine mit einem geheimen Verschlüsselungsschlüssel des Dienstanbieters verschlüsselte Version einer Information umfassen, die auch unverschlüsselt als Parameter in dem Ressourcenidentifizierer enthalten ist. Zur Prüfung dieser Authentisierungsinformation kann die Identifikationseinrichtung 104 die verschlüsselte Version mit einem dem geheimen Verschlüsselungsschlüssel zugeordneten Entschlüsselungsschlüssel, der für den Dienstanbieter in der Identifikationseinrichtung 104 hinterlegt sein kann, entschlüsseln und mit der unverschlüsselten Information vergleichen. Die Information ist vorzugsweise spezifisch für die jeweilige Anforderung von Identitätsattributen, um zu verhindern, dass eine abgefangene Information von einem Dritten für eine weitere Anforderung von Identitätsattributen verwendet werden kann.

Nachdem die Identifizierungseinrichtung den Dienstanbieter erfolgreich identifiziert und seine Berechtigung zum Erhalt von Identitätsattributen festgestellt hat, fordert die Identifikationseinrichtung 104 den Nutzer 101 in einer Antwort auf die Kontaktaufnahme durch den Webbrowser des Nutzers 101 dazu auf, sich gegenüber der Identifikationseinrichtung 104 zu identifizieren (Schritt 305). Wenn der Dienstanbieter nicht erfolgreich identifiziert worden ist und/oder nicht festgestellt wird, dass der Dienstanbieter zum Erhalt von Identitätsattributen berechtigt ist, dann wird eine Fehlerroutine durchgeführt. Hierbei kann dem Nutzer eine Fehlermeldung angezeigt werden. Ferner wird vorzugsweise der Dienstanbieter informiert. Ferner wird der Nutzer in einer Ausgestaltung von der Identifikationseinrichtung 104 zu der Servereinrichtung 103 bzw. der von der Servereinrichtung 103 bereitgestellten Webplattform umgeleitet. Die Umleitung erfolgt vorzugsweise in der gleichen Weise, wie es weiter unten im Zusammenhang mit einer gescheiterten Nutzerauthentifizierung beschrieben wird, mittels eines Ressourcenidentifizierers der zuvor von der Servereinrichtung übergeben worden ist und speziell für den Fehlerfall vorgesehen ist.

Zur Identifizierung übermittelt der Nutzer 101 in dem Schritt 306 die angeforderten Identifizierungsdaten, welche die in der Identitätsdatenbank hinterlegte Nutzerkennung umfassen können. Die Aufforderung zur Identifizierung des Nutzers 101 ist vorzugsweise in einer Webseite enthalten, welche die Identifikationseinrichtung 104 als Antwort auf die Kontaktaufnahme durch den Webbrowsers des Nutzers 101 an den Webbrowser zurückgibt. Die Webseite bietet dem Nutzer 101 vorzugsweise auch die Möglichkeit zur Eingabe der angeforderten Identifizierungsdaten. Umfassen die Identifikationsdaten eine Nutzerkennung, kann die Website ein Eingabefeld zur Eingabe der Nutzerkennung aufweisen, wobei die eingegebene Nutzerkennung aufgrund einer Nutzeraktion, beispielsweise die Betätigung eines entsprechenden Buttons, an die Identifikationseinrichtung 104 übermittelt wird.

In der Identifikationseinrichtung 104 erfolgen die Identifizierung des Nutzers 101 und die Ermittlung der Eintragungen des Nutzers 101 in der Identitätsdatenbank 104 vorzugsweise erst anhand der von dem Nutzer 101 angegebenen Identifizierungsdaten. Insbesondere werden keine den Nutzer 101 identifizierenden Angaben von der Servereinrichtung 103 als Parameter innerhalb des Ressourcenidentifizierers oder in anderer Weise an die Identifikationseinrichtung 104 übergeben. Aus diesem Grund ist es auch nicht erforderlich, dass der Nutzer 101 sich zuvor gegenüber der Servereinrichtung 103 identifiziert.

Neben der Identifizierung des Nutzers 101 erfordert die Bereitstellung von Identitätsattributen vorzugsweise auch die erfolgreiche Authentifizierung des Nutzers 101 durch die Identifikationseinrichtung 104. In einer Ausgestaltung ist eine zweistufe Authentisierung des Nutzers 101 vorgesehen. Hierbei wird der Nutzer 101 zusammen mit der Aufforderung zur Übermittlung seiner Identifizierungsdaten dazu aufgefordert, Authentisierungsdaten für eine erste Nutzerauthentifizierung zu übermitteln. Bei diesen Authentisierungsdaten kann es sich um das in der Identitätsdatenbank 105 hinterlegte geheime Passwort des Nutzers 101 handeln. Die Eingabe des Passworts kann in einem weiteren Eingabefeld zusammen mit der Eingabe der die Nutzerkennung umfassenden Identifikationsdaten auf derselben Webseite erfolgen, wobei die Übermittlung der Authentisierungsdaten aufgrund einer entsprechenden Nutzeraktion in dem gleichen Schritt 306 erfolgt wie die Übermittlung der Identifizierungsdaten. Nach erfolgreicher Prüfung der Authentisierungsdaten gelangt der Nutzer 101 bei der zweistufigen Authentifizierung in ein erstes Authentisierungsniveau.

Nach dem Übergang in das erste Authentisierungsniveau nimmt die Identifikationseinrichtung 104 ggf. in der zweiten Stufe eine weitere Authentifizierung des Nutzers 101 vor (Schritt 307). Die Nutzerauthentifizierung in der zweiten Stufe erfolgt vorzugsweise in anderer Weise als die Nutzerauthentifizierung in der ersten Stufe, und es werden andere Authentifizierungsdaten verwendet werden als in der erste Authentisierungsstufe. Die Nutzerauthentifizierung ist ein weiterer Prozess, welcher einen Datenaustausch zwischen dem Nutzer 101 und der Identifikationseinrichtung 104 beinhaltet, der in der Figur nicht im Einzelnen dargestellt ist. Je nach Art der vorgesehenen Nutzerauthentifizierung in der zweiten Stufe erfolgt die Kommunikation über weitere Webseiten, die von der Identifikationseinrichtung 104 bereitgestellt werden und/oder anhand von Nachrichten, die zwischen dem Nutzercomputer 102 und der Identifikationseinrichtung 104 ausgetauscht werden. In einer Ausgestaltung wird die Nutzerauthentifizierung in der zweiten Stufe mittels des zuvor bereits beschriebenen Mobilfunk-TAN-Verfahrens vorgenommen. Alternativ kann die Nutzerauthentifizierung in der zweiten Stufe auch in anderer Weise vorgenommen werden, beispielsweise durch Prüfung eines biometrischen Merkmals des Nutzers 101, wie etwa einem Fingerabdruck oder dem Irismuster des Nutzers 101, das mittels des Nutzercomputers 102 erfasst und zur Prüfung an die Identifikationseinrichtung 104 gesendet wird.

Ob eine Nutzerauthentifizierung in einer zweiten Stufe vorgesehen ist, richtet sich in einer Ausgestaltung nach dem Dienstanbieter, der die Identitätsattribute des Nutzers anfordert. Dabei kann in der Identifikationseinrichtung 104 für die registrierten Dienstanbieter hinterlegt werden, ob eine zweistufe oder lediglich eine einstufe Authentifizierung durchgeführt wird. In einer weiteren Ausgestaltung wird in Abhängigkeit von durch den Dienstanbieter übergebenen Informationen bestimmt, ob eine zweistufe oder einstufe Authentifizierung des Nutzers durchgeführt wird. Es kann vorgesehen sein, dass dies anhand der von dem Dienstanbieter angeforderten Zusammenstellung von Identitätsattributen ermittelt wird, die wie nachfolgend beschrieben in dem von der Servereinrichtung 103 bereitgestellten Ressourcenidentifizierer zur Umleitung des Nutzers 101 zur Identifikationseinrichtung 104 angegeben sind. Dabei ist für die vorgegebenen Zusammenstellung jeweils hinterlegt, ob eine einstufe oder zweistufe Authentifizierung durchgeführt werden soll. In einer weiteren Ausgestaltung enthält der Ressourcenidentifizierer eine Angabe darüber, ob eine einstufige oder eine zweistufige Nutzerauthentifizierung durchgeführt werden soll. Diese Angabe wird von der Identifikationseinrichtung 104 ausgelesen, und die Identifikationseinrichtung 104 nimmt die Nutzerauthentifizierung entsprechend der Angabe vor.

Nach der erfolgreichen Authentifizierung des Nutzers 101 in der ggf. ausgeführten zweiten Authentifizierungsstufe gelangt der Nutzer 101 in ein zweites, hohes Authentisierungsniveau, das bei der zweistufen Authentisierung eine Voraussetzung für die Bereitstellung von Identitätsattributen des Nutzers 101 ist. In alternativen Ausführungsformen wird anstelle einer zweistufigen Nutzerauthentifizierung lediglich eine einstufige Nutzerauthentisierung vorgenommen. In diesem Fall ist die Authentisierung nach erfolgreicher Beendigung der Authentisierung in der ersten Stufe bereits erfolgreich abgeschlossen.

Während der Kommunikation mit dem Nutzer 101 zur Identifizierung und/oder Authentisierung des Nutzers 101 informiert die Identifikationseinrichtung 104 den Nutzer 101 vorzugsweise über den von ihr identifizierten Dienstanbieter, dem die Identitätsattribute bereitgestellt werden sollen. Zudem wird vorzugsweise eine Angabe eines Zwecks, zu dem der Dienstanbieter die Identitätsattribute anfordert, an den Nutzer 101 übermittelt. Die Angabe kann von der Servereinrichtung 103 des Dienstanbieters als ein Parameter in der Ressourcenidentifizierer eingebracht werden, die verwendet wird, um den Nutzer 101 zu der Identifikationseinrichtung 104 umzuleiten. Die Identifikationseinrichtung 104 liest die Angabe bei der Kontaktaufnahme durch den Webbrowser des Nutzers 101 aus dem Ressourcenidentifizierer aus und übermittelt die ausgelesene Angabe an den Nutzer 101. Hierzu kann die Angabe beispielsweise in die Webseite aufgenommen werden, mit der die Identifikationseinrichtung 104 den Nutzer 101 zur Eingabe von Identifikations- und/oder Authentisierungsdaten auffordert.

Anhand der Information über den Dienstanbieter und den Zweck der Anforderungen der Identitätsattribute hat der Nutzer 101 die Möglichkeit, die Bereitstellung seiner Identitätsattribute mit seiner vorangegangenen Interaktion mit dem Dienstanbieter in Verbindung zu bringen bzw. zu prüfen, ob die Anforderung zur Bereitstellung von Identitätsattributen mit einer solchen vorangegangenen Interaktion mit einem Dienstanbieter in Zusammenhang steht. Die Aufforderung zur Identifikation und Authentisierung des Nutzers 101 sowie die Angaben zu dem Dienstanbieter und Zweck der Bereitstellung der Identitätsattribute ist vorzugsweise in einer Webseite enthalten, welche die Identifikationseinrichtung 104 als Antwort auf die Kontaktaufnahme durch den Webbrowsers des Nutzers 101 an den Webbrowser zurückgibt. Die Webseite bietet dem Nutzer 101 die Möglichkeit, seine Nutzerkennung und das zugehörige Passwort zur Identifizierung und zur ersten Authentifizierung einzugeben. Hierzu können entsprechende Eingabefelder auf der Webseite vorhanden sein.

Sofern die Identifizierung oder die Authentifizierung des Nutzers 101 fehlschlägt, führt die Identifikationseinrichtung 104 eine Fehlerroutine aus, die weiter unten noch erläutert wird. Nach erfolgreicher Identifizierung und nach erfolgreicher Authentifizierung des Nutzers 101 in dem vorgesehenen ein- oder zweistufigen Authentisierungsverfahren liest die Identifikationseinrichtung 104 in dem Schritt 308 aus der Identitätsdatenbank 105 die Identitätsattribute des Nutzers 101 aus, die für die Servereinrichtung 103 bereitgestellt werden sollen. Hierbei handelt es sich um die Identitätsattribute aus einer Zusammenstellung, deren Bereitstellung von der Servereinrichtung 103 angefordert wird. Eine Kennung dieser Zusammenstellung kann als ein Parameter in dem von der Servereinrichtung 103 bereitgestellten Ressourcenidentifizierer zur Umleitung des Nutzers 101 zur Identifikationseinrichtung 104 enthalten sein. Ist dies der Fall, wird die gewünschte Zusammenstellung von der Identifikationseinrichtung 104 aufgrund der Auswertung der in dem Ressourcenidentifizierer enthaltenen Parameter bei der Kontaktaufnahme durch den Webbrowser des Nutzers 101 ermittelt. Wie zuvor beschrieben, kann auch vorgesehen sein, dass die Zusammenstellung für den Dienstanbieter in der Identifikationseinrichtung 104 hinterlegt ist. Dabei kann stets die hinterlegte Zusammenstellung zugrunde gelegt werden, oder die hinterlegte Zusammenstellung wird nur dann zugrunde gelegt, wenn von der Servereinrichtung 103 keine andere Zusammenstellung innerhalb des Ressourcenidentifizierers an die Identifikationseinrichtung 104 übergeben wird.

Bevor die aus der Identitätsdatenbank 105 ausgelesenen Identitätsattribute für die Servereinrichtung 103 bereitgestellt werden, fordert die Identifikationseinrichtung 104 den Nutzer 101 in dem Schritt 309 dazu auf, der Bereitstellung der Identitätsattribute zuzustimmen. Zusammen mit der Aufforderung werden dem Nutzer 101 vorzugsweise die ausgelesenen und zur Bereitstellung für die Servereinrichtung 103 vorgesehenen Identitätsattribute angezeigt. Dies erfolgt insbesondere auf einer Webseite, die von der Identifikationseinrichtung 104 nach erfolgreicher Authentifizierung des Nutzers 101 an den Webbrowser 101 des Nutzers 101 zurückgegeben wird. Die Zustimmung zur Bereitstellung der Identitätsattribute wird in dem Schritt 310 von dem Nutzercomputer 102 an die Identifikationseinrichtung 104 übermittelt. Hierzu kann der Nutzer 101 etwa einen entsprechenden Button auf der Webseite betätigen, mit dem er zur Zustimmung aufgefordert wird. Durch die Präsentation der zur Übermittlung an den Dienst-anbieter vorgesehenen Identitätsattribute erhält der Nutzer 101 die Möglichkeit, die für die Servereinrichtung 103 bereitgestellten Daten einzusehen und zu prüfen, ob er der Bereitstellung zustimmt oder der Bereitstellung widerspricht.

Wenn der Nutzer 101 der Bereitstellung der Identitätstattribute widerspricht, wird von der Identifikationseinrichtung 104 eine Fehlerroutine ausgeführt. Andernfalls, d.h. aufgrund der Zustimmung des Nutzers 101, stellt die Identifikationseinrichtung 104 die Identitätsattribute für die Servereinrichtung 103 bereit (Schritt 311). In einer Ausgestaltung wird hierzu eine Nachricht von der Identifikationseinrichtung 104 erzeugt, welche die Identifikationseinrichtung 104 sodann an die Servereinrichtung 103 übermittelt. In einer weiteren Ausgestaltung ist vorgesehen, dass die Identitätsattribute zum Abruf durch die Servereinrichtung 103 in der Identifikationseinrichtung 104 hinterlegt werden. Für den Abruf der Informationen wird eine Zugangsinformation an die Servereinrichtung 103 übermittelt, die als ein so genanntes *Access Ticket* ausgestaltet sein kann. Die Zugangsinformation, kann von der Servereinrichtung 103 an die Identifikationseinrichtung übermittelt werden. Diese prüft die Zugangsinformation und gibt den Zugriff auf die Identitätsattribute nach erfolgreicher Prüfung der Zugangsinformation für die Servereinrichtung 103 frei. Zusätzlich zu der Übergabe der Zugangsinformation kann vorgesehen sein, dass sich die Servereinrichtung 103 authentisiert, und die Identitätsattribute erst nach erfolgreicher Authentifizierung der Servereinrichtung 103 in der Identifikationseinrichtung 104 freigegeben werden. Es kann weiterhin vorgesehen sein, dass für den Abruf eine Zeitbeschränkung eingerichtet wird, so dass die Identitätsattribute nach Ablauf einer vorgegebenen Zeitspanne nach der Übermittlung der Mitteilung mit der Zugangskennung an die Servereinrichtung 103 nicht mehr abgerufen werden können.

Der Nutzer 101 wird aufgrund der Bereitstellung seiner Identitätsattribute für die Servereinrichtung 103 von der Identifikationseinrichtung 104 zu der Servereinrichtung 103 umgeleitet. Zu diesem Zweck stellt die Identifikationseinrichtung 104 in dem Schritt 312 auf einer Webseite einen weiteren Hyperlink bereit, der mit einem Ressourcenidentifizierer verknüpft ist, welche auf die Servereinrichtung 103 bzw. die von der Servereinrichtung 103 bereitgestellte Webplattform verweist und als Netzwerkadresse der Servereinrichtung 103 dient. Dabei kann vorgesehen sein, dass der Ressourcenidentifizierer auf eine vorgegebene Webseite der Webplattform verweist. Dadurch, dass der Nutzer 101 dem Hyperlink folgt, gelangt er zu der entsprechenden Website der von der Servereinrichtung 103 bereitgestellten Webplattform (Schritt 313). Der Ressourcenidentifizierer wird in einer Ausgestaltung ebenfalls als ein Parameter innerhalb des von der Servereinrichtung 103 bereitgestellten Ressourcenidentifizierers zur Umleitung des Nutzers 101 zu den Identifikationseinrichtung 104 angegeben. In einer weiteren Ausgestaltung ist vorgesehen, dass der Ressourcenidentifizierer innerhalb der Registrierung des Dienstanbieters in der Identifikationseinrichtung 104 hinterlegt ist. Ähnlich wie bei der Ermittlung der von dem Dienstanbieter gewünschten Zusammenstellung der Identitätsattribute des Nutzers 101 kann zudem vorgesehen sein, dass ein in der Identifikationseinrichtung 104 hinterlegter Ressourcenidentifizierer nur dann verwendet wird, wenn von der Servereinrichtung 103 kein anderer Ressourcenidentifizierer übergeben wird.

Sofern der Nutzer 101 nicht erfolgreich in der Identifikationseinrichtung 104 identifiziert werden kann, die Identifikationseinrichtung 104 den Nutzer 101 nicht erfolgreich authentifizieren kann oder der Nutzer 101 seine Zustimmung zu der Bereitstellung seiner Identitätsattribute für den Dienstanbieter verweigert, wird eine Fehlerroutine durchgeführt. Bei der Durchführung der Fehlerroutine werden keine Identitätsattribute des Nutzers 101 an die Servereinrichtung 103 übergeben. Es kann vorgesehen sein, dass die Identifikationseinrichtung 104 eine Nachricht an die Servereinrichtung 103 übermittelt, mit der die Identifikationseinrichtung 104 der Servereinrichtung 103 mitteilt, dass keine Bereitstellung von Identitätsattributen erfolgt. In der Nachricht kann ein Grund dafür angegeben werden, dass keine Identitätsattribute des Nutzers 101 bereitgestellt werden. Der Nutzer 101 wird vorzugsweise auch immer im Rahmen der Fehlerroutine von der Identifikationseinrichtung 104 zu der Servereinrichtung 103 bzw. der von der Servereinrichtung 103 bereitgestellten Webplattform umgeleitet. Hierbei erfolgt die Umleitung vorzugsweise mittels eines anderen Ressourcenidentifizierers als im Fall der Bereitstellung der Identitätsattribute. Der Ressourcenidentifizierer, der für die Umleitung im Fehlerfall vorgesehen ist, kann auf eine Website verweisen, mit welcher der Prozess des Nutzers 101 von der Servereinrichtung 103 im Fehlerfall weitergeführt wird. Der Ressourcenidentifizierer kann ebenfalls von der Servereinrichtung 103 an die Identifikationseinrichtung 104 übergeben werden, insbesondere innerhalb des von der Servereinrichtung 103 bereitgestellten Ressourcenidentifizierers zur Umleitung des Nutzers 101 zu der Identifikationseinrichtung 104. Gleichfalls kann der im Fehlerfall verwendete Ressourcenidentifizierer in der Identifikationseinrichtung 104 hinterlegt sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. Weitere Varianten der Erfindung und ihre Ausführung ergeben sich für den Fachmann aus der vor-angegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichen

- 101: Nutzer
- 102: Nutzercomputer
- 103: Servereinrichtung
- 104: Identifikationseinrichtung
- 105: Identitätsdatenbank
- 201: Mobilfunkendgerät
- 202: Mobilfunknetz

- 203a, 203b, 204-206: Schritte
- 301-312: Schritte

## Patentansprüche

1. Verfahren zum Bereitstellen von Identitätsattributen eines Nutzers für einen Dienstanbieter, wobei eine Mehrzahl von Identitätsattributen in einer Identifikationseinrichtung gespeichert ist und wobei das Verfahren folgende Schritte umfasst:
- Empfangen einer Anforderung des Nutzers zur Bereitstellung der Identifikationsdaten in der Identifikationseinrichtung, wobei die Anforderung aufgrund einer Umleitung des Nutzers von dem Dienstanbieter zu der Identifikationseinrichtung übermittelt wird,
- Empfangen von durch den Dienstanbieter bereitgestellten Informationen in der Identifikationseinrichtung zusammen mit der Anforderung,
- Identifizieren des Nutzers in der Identifikationseinrichtung anhand von Daten, die von dem Nutzer an die Identifikationseinrichtung übergeben werden, und Ermitteln der dem identifizierten Nutzer zugeordneten Identitätsattribute und
- Bereitstellen der Identitätsattribute für den Dienstanbieter in Abhängigkeit von den zusammen mit der Anforderung erhaltenen Informationen.

2. Verfahren nach Anspruch 1, wobei die bereitgestellten Identitätsattribute des Nutzers auf eine von dem Dienstanbieter angeforderte Zusammenstellung von Identitätsattributen beschränkt werden und wobei die angeforderte Zusammenstellung aus einer Mehrzahl von vorgegebenen Zusammenstellungen ausgewählt ist.

3. Verfahren nach Anspruch 2, wobei eine Angabe der angeforderten Zusammenstellung in den zusammen mit der Anforderung erhaltenen Informationen, die von dem Dienstanbieter bereitgestellt werden, enthalten ist.

4. Verfahren nach Anspruch 1 oder 2, wobei die Angabe der angeforderten Identitätsattribute eine der Zusammenstellung zugeordneten Kennung umfasst.

5. Verfahren nach einem der vorangehenden Ansprüche, wobei die zusammen mit der Anforderung erhaltenen Informationen, die von dem Dienstanbieter bereitgestellt werden, eine Angabe der Identität des Dienstanbieters enthalten.

6. Verfahren nach Anspruch 5, wobei die Bereitstellung der Identitätsattribute in Abhängigkeit von einer ermittelten Berechtigung des anhand der Angabe identifizierten Dienstanbieters zum Erhalt von Identitätsattributen erfolgt.

7. Verfahren nach einem der vorangehenden Ansprüche, wobei die Umleitung des Nutzers zu der Identifikationseinrichtung aufgrund eines Aufrufs eines von dem Dienstanbieter auf einer Webseite bereitgestellten Ressourcenidentifizierers, insbesondere einer URL, erfolgt.

8. Verfahren nach Anspruch 7, wobei die von dem Dienstanbieter bereitgestellten Informationen als Parameter in dem Ressourcenidentifizierer enthalten sind.

9. Verfahren nach einem der vorangegangenen Ansprüche, wobei zusätzlich zu der Identifizierung des Nutzers eine Authentifizierung des Nutzers vorgenommen wird und wobei die die Identitätsattribute nur bei erfolgreicher Authentifizierung bereitgestellt werden.

10. Verfahren nach einem der vorangegangenen Ansprüche, wobei die Identifikationseinrichtung die Identitätsattribute bereitstellt, nachdem der Nutzer der Bereitstellung auf eine entsprechende Aufforderung der Identifikationseinrichtung zugestimmt hat, wobei die bereitzustellenden Identitätsattribute dem Nutzer im Zusammenhang mit der Aufforderung angezeigt werden.

11. Verfahren nach einem der vorangegangenen Ansprüche, wobei der Nutzer aufgrund der Bereitstellung der Identitätsattribute von der Identifikationseinrichtung zu dem Dienstanbieter umgeleitet wird.

12. Verfahren nach Anspruch 11, wobei die Umleitung des Nutzers zu dem Dienstanbieter aufgrund des Aufrufs eines von der Identifikationseinrichtung bereitgestellten weiteren Ressourcenidentifizierers erfolgt.

13. Verfahren nach Anspruch 12, wobei der weitere Ressourcenidentifizierer innerhalb der zusammen mit der Anforderung erhaltenen Informationen, die von dem Dienstanbieter bereitgestellt werden, an die Identifikationseinrichtung übergeben wird.

14. Computerprogramm mit Anweisungen zur Durchführung eines Verfahrens nach einem der vorangegangenen Ansprüche mittels einer Prozessoreinrichtung, wenn das Computerprogramm auf der Prozessoreinrichtung ausgeführt wird.

15. Identifikationseinrichtung zum Bereitstellen von Identitätsattributen eines Nutzers für einen Dienstanbieter, wobei eine Mehrzahl von Identitätsattributen in einer Identifikationseinrichtung gespeichert ist und wobei die Identifikationseinrichtung dazu ausgestaltet ist,
- eine Anforderung des Nutzers zur Bereitstellung der Identifikationsdaten zu empfangen, wobei die Anforderung aufgrund einer Umleitung des Nutzers von dem Dienstanbieter zu der Identifikationseinrichtung übermittelt wird,
- durch den Dienstanbieter bereitgestellte Informationen zusammen mit der Anforderung zu empfangen,
- den Nutzer anhand von Daten zu identifizieren, die von dem Nutzer an die Identifikationseinrichtung übergeben werden, und die dem identifizierten Nutzer zugeordneten Identitätsattribute zu ermitteln und
- die Identitätsattribute für den Dienstanbieter in Abhängigkeit von den zusammen mit der Anforderung erhaltenen Informationen bereitzustellen.
